Europäisches Patentamt

(19) **European Patent Office**

**Office européen des brevets**

(11) Publication number: **0 014 185**
A1

(12) # EUROPEAN PATENT APPLICATION

(21) Application number: **80850007.8**

(22) Date of filing: **21.01.80**

(51) Int. Cl.³: **B 60 R 9/04**

(30) Priority: **22.01.79 NO 790207**

(71) Applicant: **STOKKENDAL & CO., Nadderudvelen 132, N-1343 Eiksmarka (NO)**

(43) Date of publication of application: **06.08.80 Bulletin 80/16**

(72) Inventor: **Stokkendal, Svend, Nadderudvelen 102, N-1343 Eiksmarka (NO)**

(84) Designated Contracting States: **DE FR GB SE**

(74) Representative: **Hammar, Ernst et al, H. ALBIHNS PATENTBYRA AB Box 7664, S-103 94 Stockholm (SE)**

(54) **Roof rack for automobiles.**

(57) A roof rack for automobiles, comprising two cross bars for placement across the roof of the car (8), and a frame (4) for luggage, movable and downwardly pivotable in relation to the cross bars on wheels. The wheels, each of which is attached to an outer end of each cross bar, are aligned with one another. The frame (4) has on each of two opposite sides a profile configuration which is in engagement with the correspondingly formed wheels. The profiles of the frame (4) consist of outwardly open U-profiles, and the cross bars have an inwardly directed flange at the lower, inner, longitudinal edge. The flange is supporting the frame (4) when the frame has been pushed in to lie between the cross bars.

EP 0 014 185 A1

ACTORUM AG

## Roof rack for automobiles

The invention relates to an improvement to a roof rack for automobiles, comprising two cross bars which can be placed across the roof of a car and a frame for luggage which is movable and downwardly pivotable in relation to the cross bars.

It has been a problem in connection with the use of roof racks on automobiles to lift up heavy pieces of luggage, for example, suitcases, bicycles and the like, onto the rack, and to get them down again, as well as to fasten them securely to the rack. This has been especially problematical in connection with the transportation of bicycles on a roof rack, because a bicycle is both heavy and unwieldy and is also difficult to fasten to the rack. The latter problem has become more evident owing to the increasingly popular practice of transporting bicycles by car to a suitable point of departure for a cycling trip, for example, to a large recreational area where good roads are found but where vehicular traffic is forbidden. This is often the case in outdoor recreational areas around large cities and in various types of national parks and reserves.

Another area in which roof racks are being used to an increasing extent is for the transportation of small boats on the roof of a car. Here, too, the problem of raising and lowering the boat onto/off the rack is very difficult.

From U.S. Patent 4,058,243 a roof rack is known which consists of two cross bars spanning the roof of the car and fastened to the car's drip moldings. Attached to these cross bars are longitudinal rails and a movable carriage having rollers which engage with the rails. The movable rack can be drawn backwards and be let down from the rear edge of the rails, which are attached to the cross bars in such a way that the carriage or frame assumes a sloping position from the ground up towards the rails. If one is transporting a boat, for example, the boat can be fastened to the detached, movable carriage and be pushed in onto the rails on the roof of the car.

The aim of the present invention is to provide an improvement upon the above prior art roof rack.

The improvement is obtained according to the invention with a roof rack for an automobile comprising two cross bars for placement across the roof of an automobile and a luggage frame which is movable and downwardly pivotable in relation to the cross bars on wheels, rollers, slide blocks or the like, and is characterized in that the wheels, rollers, slide blocks or the like are attached to one outer end of each cross bar, said wheels being aligned with one another, and in that the frame, on each of two opposite sides thereof, has a profile configuration which is in engagement with said, correspondingly formed wheels or the like.

In a preferred embodiment, the profile configuration of the frame consists of outwardly open U-profiles.

A further feature is that the cross bars have an inwardly extending flange at the lower, inner longitudinal edge thereof, which flange supports the frame from below when the frame has been pushed in to lie between the cross members.

To prevent the frame, in a downwardly pivoted position, from damaging the car, a fold-out brace is provided on the underside of the frame, extending in the longitudinal direction of the car, the legs of the brace being of such length that the frame will be held out away from the side of the car by the extended brace when the frame, in its fully extended position, hangs down along the side of the car, suspended from the wheels on the cross bars.

Another feature of the invention is that a stop member is provided in the U-profiles of the frame at the end thereof opposite the wheels.

In a further development, a fold in/fold out support is provided on the top side of the frame, said support preferably being a brace for supporting an upper portion of a bicycle, and fastening means for the wheels of a cycle are also provided on at least one side of the frame.

Still another feature is that a luggage basket may be provided, easily detachable from the frame. In addition, when the frame has been pushed all the way in between the cross bars, means are provided for locking it to the cross bars.

The arrangement of the rollers or the like at one end of each of the cross bars which are attached to the roof of a car, permits the detachable frame or rack to be moved laterally across the roof of the car. Because the rollers are permanently mounted at this one edge of the roof, the frame will hang approximately straight down along one side of the car,and luggage can easily be secured to the rack in this position. It is then far easier to push the rack onto the car roof than is the case with the prior art roof racks of this type. One lifts the rack straight up in an easy lifting movement, bending the knees and lifting with the thigh muscles and a straight back. When one has lifted the rack a distance up into the air, it will be possible to swing it in over the roof of the car around the rollers. In this way, part of the weight of the luggage on the rack is shifted to the other side of the axis of pivot, so that it is easier to lift the load. If one loads the luggage onto the upper portion of the rack as it hangs down along the side of the car, the benefits one obtains from this advantageous effect will be substantial.

Another advantage of the invention is that it is inexpensive to produce, requiring only insignificant extra costs in relation to the manufacture of a conventional roof rack. The only extra component needed is the rollers, and one must of course ensure that the profiles on two opposite sides of the rack are suited for engagement with the rollers.

With the roof rack of the invention, it is very easy to position heavy and/or unwieldy luggage on the rack and to secure it to the rack.

The invention will be elucidated further in the following with reference to the drawings, where

Figure 1 is a schematic drawing of an automobile with the roof rack of the invention mounted thereon, seen from the side,

Figure 2 is a front view of the car and roof rack of Figure 1, with the movable frame pulled partially down along the side of the car,

Figure 3 shows the car with the roof rack of the invention as seen from above, and

Figure 4 shows the car from the front with the movable frame in two different positions as a bicycle is being placed on the rack.

Figure 5 shows a detail of the roof rack of the invention, in side view,

Figure 6 shows the same detail as seen from the front, and

Figure 7 shows the same detail seen from directly above.

Figure 8, in somewhat greater detail, shows a side view of the rack with the frame pivoted down along the side of the car,

Figure 9 shows the rack in the same position as in Figure 8, but seen from the front, and

Figure 10 shows a fastening means for a bicycle in connection with the movable frame.

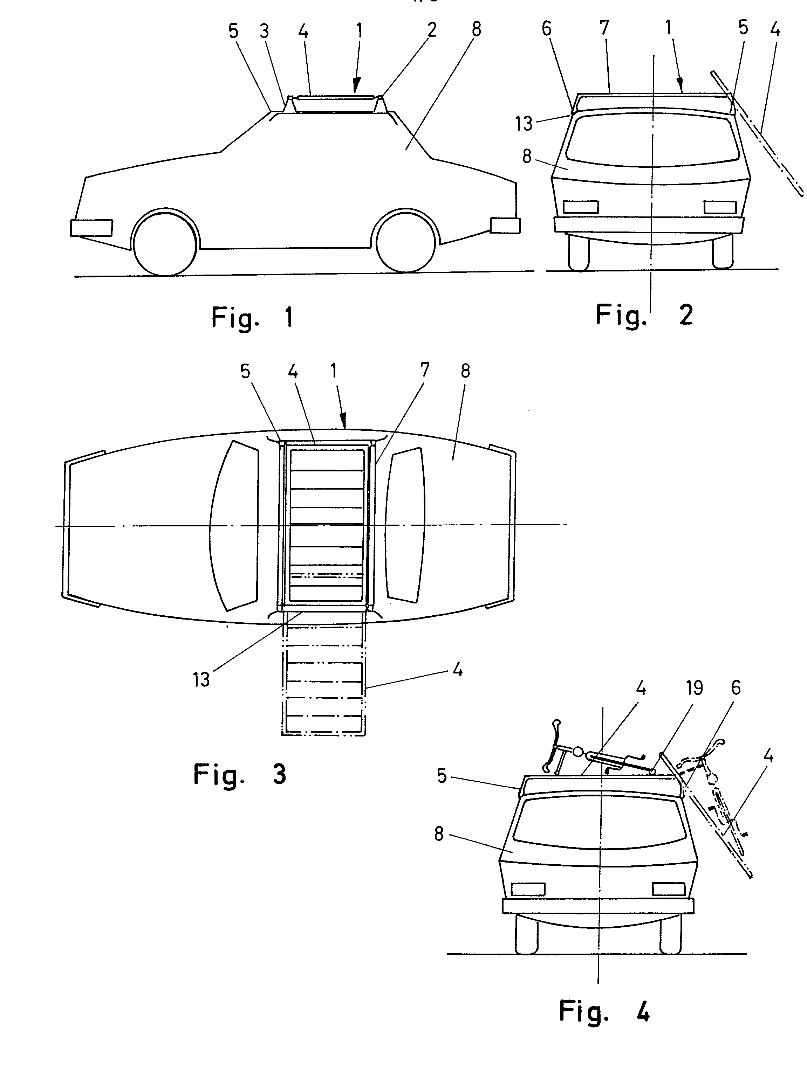

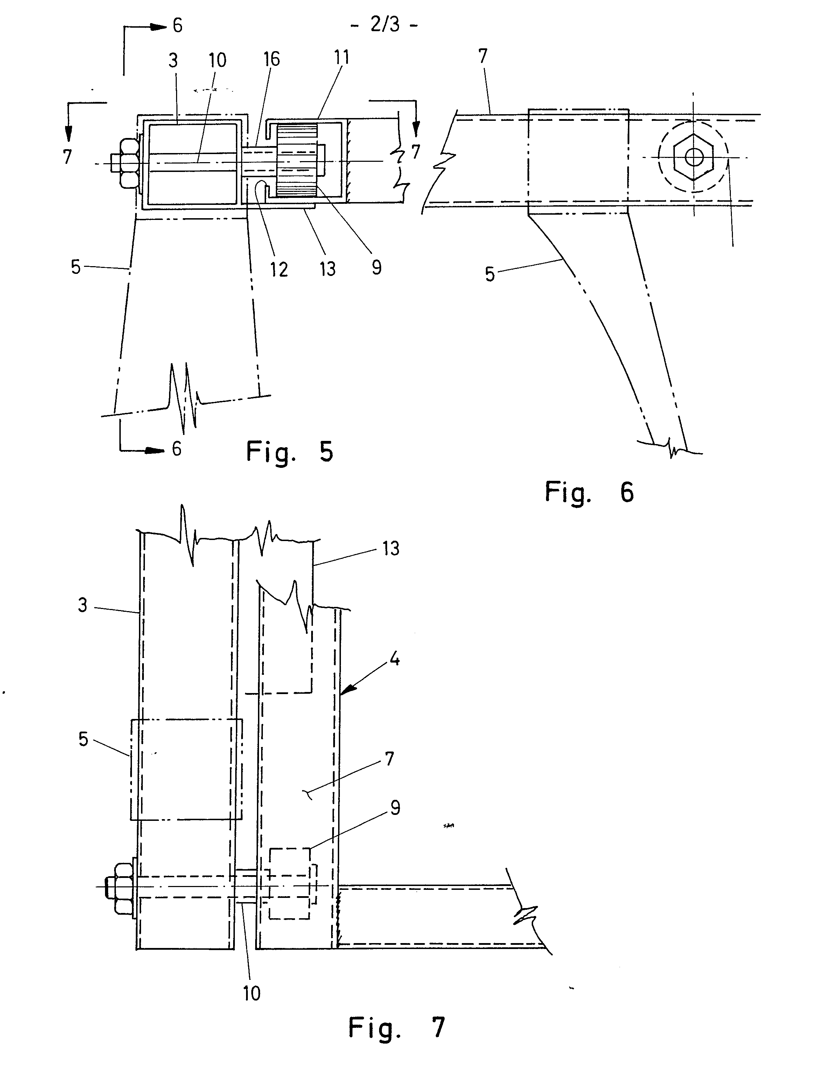

Figures 1 - 4 schematically illustrate the way in which the roof rack 1 functions. The rack consists of two cross bars 2 and 3 and a movable frame or luggage carrier 4. The cross bars 2 and 3 consist of two brackets 5 and 6 and a strong cross beam 7. The brackets 5 and 6 are of a type which can be fastened to an automobile's drip moldings. The frame or luggage carrier 4 is arranged so as to be movable in relation to the cross bars 2 and 3 as can bee seen in Figures 2 - 4 and as shown in detail in Figures 5 - 7.

Attached to one end of each of the cross bars 2 and 3 are respective rollers 9, the two opposing rollers 9 being directly aligned with one another and facing inwards into the space between the two cross members. The rollers 9 can be attached by means of a through bolt 10 or in some other practical manner. Instead of a roller or a wheel, a nylon slide foot could be used. The two rollers 9 engage with two opposite sides of the frame 4. In the embodiment example illustrated, these two opposite frame sides consist of respective, outwardly open U-shaped profiles 11 which are in engagement with the rollers 9. At the ends of the legs of the U, inwardly-extending flanges 12 are provided to secure the frame so that it cannot become disengaged from the wheels. A portion of the lower leg of the U-profile could also be removed, such that the frame could easily be detached when in a specific position in relation to the cross bars 2 and 3. The strong cross beams 7, at the inwardly directed lower edges thereof, are provided with an outwardly projecting flange 13 which supports the frame when it has been pushed in to lie between the cross bars.

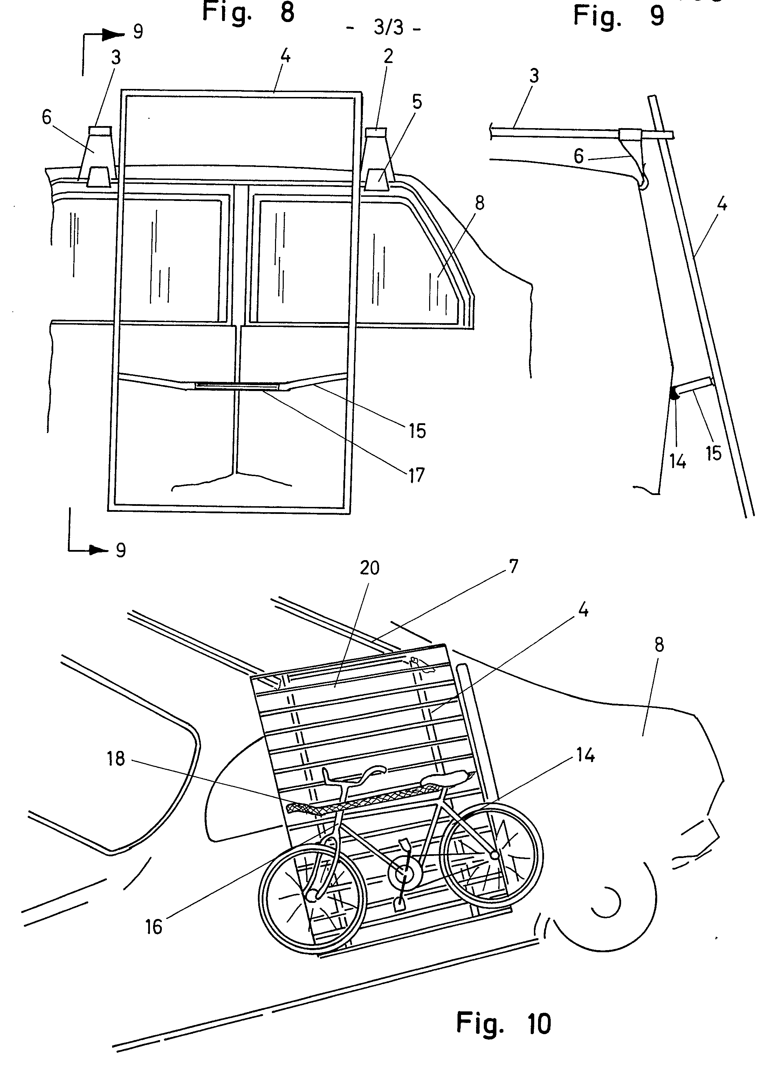

In Figures 8 - 10, one can see in more detail how the rack of the invention works. When luggage, for example, a bicycle 16, is to be placed on the rack, the frame 4 is pulled out toward the side of the cross bars 2,3 on which the rollers 9 are located. A locking means (not illustrated) is provided between the frame 4 and the cross members 2,3, which must be released before the frame can be moved. The frame 4 is lowered down along the side of the car 8, and to prevent damage to the side of the car, a brace 15 found on the underside of the frame is folded out to rest against the side of the car, a portion of the brace being covered with a soft padding 17. Similarly, on the top side of the frame 4 there is a fold-out brace 18 which also can have a soft padded covering on a portion thereof, similar to the padding 17 on the brace 15. The brace 18 is used to support the bicycle such that its handle-bars will be elevated and thus be prevented from contacting the roof of the car. This can be seen especially clearly in Figure 4. It is also advantageous that fastening means 19 be provided on the top side of the frame, for example, in the form of braces attached to the upper side of the frame.

The frame 4 will usually have the form of a rack, with longitudinal ribs 20 being provided for the support of luggage.

As is apparent from the above description and drawings, the rack of the invention does not require much more equipment or involve substantially greater production costs than a conventional automobile roof rack. A standard roof rack, which combines a luggage frame and ski rack, comprises cross members 2 and 3 on the roof of the car and a detachable frame with ribs 4 which can be attached to the cross members 2 and 3. To produce the roof rack of the invention, therefore, one need only provide in addition the two rollers 9 and the brace 15.

CLAIMS

1. An improvement to a roof rack for automobiles, comprising two cross bars (2,3) for placement across the roof of the car and a frame (4) for luggage, movable and downwardly pivotable in relation to the cross bars on wheels, rollers, slide blocks or the like, characterized in that the wheels, rollers, slide blocks or the like are attached to one outer end of each cross bar, said wheels being aligned with one another, and that the frame (4) on each of two opposite sides thereof has a profile configuration which is in engagement with said, correspondingly formed wheels or the like.

2. A roof rack according to claim 1, characterized in that the profiles of the frame (4) consist of outwardly open U-profiles.

3. A roof rack·according to claims 1 or 2, characterized in that the cross bars (2,3) have an inwardly directed flange (13) at the lower, inner, longitudinal edge thereof, said flange (13) supporting the frame (4) when the frame has been pushed in to lie between the cross bars.

4. A roof rack according to claims 1 - 3, characterized in that a brace (15) is provided on the underside of the frame (4), extending in the longitudinal direction of the automobile, the legs of said brace being of such length.that the frame (4) will be held out away from the side of the car by the extended brace (15) when the frame (4) has been pulled out fully and hangs down along the side of the car (8), suspended from the wheels (9) of the cross bars.

5. A roof rack according to one or more of the preceding claims, characterized in that a stop member is provided at one end of the U-profiles (11) of the frame (4), said end being located at the opposite end from the wheels, which stops the frame's movement when the frame is pushed all the way in between the cross bars.

0014185

Fig. 1

Fig. 2

Fig. 3

Fig. 4

0014185

Fig. 5

Fig. 6

Fig. 7

0014185

Fig. 8

Fig. 9

Fig. 10

## European Patent Office

| Category | DOCUMENTS CONSIDERED TO·BE RELEVANT Citation of document with indication, where appropriate, of relevant passages | Relevant to claim | CLASSIFICATION OF THE APPLICATION (Int. Cl.) |
|---|---|---|---|
| X | FR - A - 1 441 036 (WALTHO) <br> * fig. 1 to 4 <br> -- | 1,4,5 | B 60 R 9/04 |
| X | US - A - 4 081 095 (WILBURN et al.) <br> * entire document * <br> -- | 1-3,5 | |
| P,A | DE - U1 - 7 922 468 (KLEINDIENST) <br> -- | | |
| A | FR - A - 1 333 935 (LEGRAND) <br> -- | | TECHNICAL FIELDS SEARCHED (Int.Cl.) |
| A | US - A - 3 113 819 (BESSETTE) <br> -- | | |
| A,D | US - A - 4 058 243 (TAPPAN) <br> ---- | | B 60 R 9/00 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search <br> Berlin | Date of completion of the search <br> 25-03-1980 | Examiner <br> LUDWIG | |

EPO Form 1503.1 06.78